# EUROPÄISCHE PATENTSCHRIFT

(11) **EP 1 690 632 B1**
(45) Veröffentlichungstag und Bekanntmachung des Hinweises auf die Patenterteilung: **03.08.2011**
(21) Anmeldenummer: 06002453.6
(22) Anmeldetag: 07.02.2006
(51) Int. Cl.: B23Q 3/155

(54) **Vorrichtung zum Greifen und Halten eines Bauteils**
Device for gripping and holding an element
Dispositif de maintien et de préhension d'un objet

(30) Priorität: 11.02.2005 DE 102005006398
(43) Veröffentlichungstag der Anmeldung: 16.08.2006
(73) Patentinhaber: DECKEL MAHO Pfronten GmbH, 87459 Pfronten (DE)
(72) Erfinder: Jung, Robert, 87459 Pfronten (DE)
(74) Vertreter: Beetz & Partner

(56) Entgegenhaltungen:
- EP-A- 0 355 271
- FR-A- 2 284 410
- US-A- 5 267 766

## Beschreibung

Die Erfindung betrifft eine Vorrichtung zum Greifen und Halten eines Bauteils, insbesondere eines Werkzeugs im Handhabungssystem einer Werkzeugmaschine der im Oberbegriff des Anspruchs 1 angegebenen Gattung. Eine derartige Vorrichtung ist aus der FR-A-2 284 410 bekannt.

In programmgesteuerten Werkzeugmaschinen und Bearbeitungsze n-tren werden verschiedene Arten von Handhabungssystemen einmal für die geordnete Zufuhr bestimmter Werkstücke in den Arbeitsb e-reich der Maschine und zum anderen für den automatisierten Wechsel der Werkzeuge aus einem Werkzeugspeicher in die Bearbeitungsreinheit der Maschine verwendet.

Zu den bekannten Werkzeugspeichern für komplexe Bearbeitung s-maschinen gehören u.a. Kettenmagazine, Tellermagazine und Regalmagazine in unterschiedlichsten Ausführungen. Allen Werkzeugmagazinen gemeinsam ist eine Vielzahl von Werkzeugaufnahmen, in denen unterschiedliche Bearbeitungswerkzeuge mit ihren Werkzeugkegeln in vorgegebenen Positionen eingebracht sind. Durch fotorisch bewegbare Werkzeugwechsler werden einzelne Werkzeuge en t-sprechend dem vorgegebenen Bearbeitungsprogramm der Maschine den Magazinen entnommen und in die Bearbeitungseinheit ein - und ausgewechselt.

Aus der DE 101 63 294 ist ein Handhabungssystem für programmgesteuerte Fräs- und Bohrmaschinen bekannt, das ein neben der Werkzeugmaschine angeordnetes Werkzeug-Kettenmagazin und einen Werkzeugwechsler enthält, der einen in mehreren Achsen bewegbaren Greifer mit gegeneinander winkelversetzten Greiferzangen trägt. Jeweils eine Greiferzange dient zur Aufnahme eines gebrauchten Werkzeugs aus der Arbeitsspindel und eine zweite Greiferzange dient zum Einwechseln eines neuen Werkzeuges in die Arbeitsspindel. Das Vertikal-Kettenmagazin enthält an jedem Kettenglied eine Werkzeugaufnahme, deren Aufnahmeöffnung von zwei radial abstehenden formsteifen Haltefingern begrenzt wird. Zumindest einer dieser Haltefinger ist an dem zugeordneten Kettenglied gelenkig befestigt, sodass er gegen die Kraft einer eingebauten Feder beim Einschieben und Herausziehen eines Werkzeugkegels ausgelenkt wird.

Aus der DE 196 51 277 ist ein neben dem Ständer einer Fräs- und Bohrmaschine angeordnetes Tellermagazin bekannt, dessen kreisringförmiger Magazinteller an seinem Außenumfang regelmäßig beabstandete zangenförmige Werkzeugaufnahmen aufweist. Über jeder Werkzeugaufnahme ist eine obere Federlasche angeordnet, die auf den Ringbund eines nach oben ragenden Werkzeugkegels eine nach unten gerichtete Kraft ausübt und den Ringbund an die jeweilige zangenförmige Werkzeugaufnahme andrückt. Jede Federlasche hat einen elastisch weichen und einen formsteifen Haltefinger. Die Druckkraft dieser Federlaschen reicht jedoch nicht aus, um die in den Werkzeugaufnahmen befindlichen Werkzeuge auch bei hohen Anfahr- und Bremsbeschleunigungen am Herausfallen zu hindern. Dieses bekannte Handhabungssystem weist einen Werkzeugwechsler auf, der am freien Ende eines Schwenkarmes einen sog. Doppelgreifer trägt. Die beiden Greifer sind um einen rechten Winkel gegeneinander versetzt und weisen jeweils zwei Greif- bzw. Haltefinger auf, die eine mittlere Aufnahmeöffnung begrenzen. Beide Haltefinger jedes Greifers sind um Zapfen auslenkbar an einem Grundkörper angelenkt und können durch je ein Blockierglied gegen Federkraft in ihrer geschlossenen Position fixiert werden. Die Werkzeugaufnahmen des Magazintellers und auch die Greifer des Werkzeugwechslers erfordern aufgrund der Vielzahl ihrer Einzelteile jeweils einen erheblichen technischen Aufwand.

In der DE 42 15 697 A ist ein Werkzeugwechsler beschrieben, der zwei an einem Arm parallel nebeneinander angeordnete Greifer aufweist, die je eine Werkzeugaufnahme bilden. Die Greifer sind am Arm um eine Querachse verschwenkbar angelenkt und besitzen zwei, eine Ausnehmung umgebende formsteife Backen, von denen die eine starr ist und die andere in einem Gelenk gegen Federkraft geschwenkt werden kann. Die sich ergebende Spreizung beider Backen ermöglicht das Einführen eines standardisierten Werkzeughalters in die Werkzeugaufnahme. Die Greifer sind aufgrund der Anzahl an Einzelteilen technisch aufwändig und störanfällig. Ein ähnlicher Werkzeuggreifer mit zwei gegeneinander schwenkbaren Greifbacken ist aus der DE-OS 37 17 201 bekannt. Von einem an der Maschine fest montierten Anschlag wird ein Betätigungselement bewegt, das ein Spreizen oder Schließen der beiden Greifbacken bewirkt. Auch dieser Greifer ist außerordentlich komplex aufgebaut.

In der EP 0 355 271 A ist ein Werkzeuggreifer für ein Werkzeug-Handhabungssystem einer Werkzeugmaschine beschrieben, der ein plattenförmiges Tragglied enthält, das zwei elastisch spreizbare Bakken bzw. Haltefinger aufweist, die eine gemeinsame Aufnahmeöffnung für den zu greifenden Werkzeugkegel begrenzen. Die Tragplatte mit den integriert ausgebildeten Haltefingern ist einteilig aus einem technischen Kunststoff, z. B. aus einem Azetalharz, gefertigt. Um ein unbeabsichtigtes Lösen der ergriffenen Werkzeuge z. B. beim Anfahren oder Abbremsen eines Kettenmagazins zu vermeiden, soll die Abziehkraft zum Herausnehmen eines Werkzeugs aus einer Aufnahmeöffnung wesentlich größer als die Einschiebekraft sein. Zu diesem Zweck sind in der Kunstharz-Tragplatte jeweils im Bodenbereich der Aufnahmeöffnung mehrere integrierte Federstege als Blattfedern zwischen parallelen Schlitzen ausgebildet. Die Blattfedern und Schlitze sind schräg zur Erstreckung der Backen bzw. der Längsachse des Greifers ausgerichtet und haben eine geringe Federkonstante in Querrichtung sowie eine relative hohe Federkon stante in Längsrichtung. Aufgrund der Materialeigenschaften der verwendeten Tragplatte und auch der Ausbildung und Anordnung der integrierten Blattfedern ist dieser Greifer zur Handhabung von schweren Werkzeugen nicht geeignet.

In der FR 2 284 410 ist eine Vorrichtung zum Greifen, Halten und Wechseln von Werkzeugen im Handhabungssystem einer Werkzeugmaschine offenbart, die Tragglieder für jeweils zwei Haltefinger aufweist. Die beiden Haltefinger begrenzen eine gemeinsame Aufnahmeöffnung für das zu egreifende Werkzeug. Einer der beiden Haltefinger ist starr mit dem zugehörigen Tragglied verbunden bzw. mit diesem integriert ausgebildet und der andere Haltefinger ist mit seinem hinteren plattenförmigen Endteil auf dem Tragglied auslenkbar und gegen Federkraft spreizbar gelagert.

Aufgabe der Erfindung ist es, eine Greif- und Haltevorrichtung für das Handhabungssystem einer Werkzeugmaschine zu schaffen, die technisch einfach und kostengünstig aufgebaut ist und eine sichere Fixierung des ergriffenen Bauteils gewährleistet.

Diese Aufgabe wird erfindungsgemäß durch die Merkmale des Patentanspruchs 1 gelöst.

Durch die integrierte Ausbildung und Verbindung des Haltefingers mit dem Tragglied erübrigen sich die bei bekannten Werkzeugaufnahmen und Greifern vorgesehenen gesonderten Federelemente, wodurch sich der Herstellungsaufwand wesentlich vermindert. Eine hohe Sicherheit gegen unbeabsichtigtes Lösen der Werkzeuge aus i h-ren jeweiligen Werkzeugaufnahmen bei z.B. stoßartigen Belastungen, hohen Anfahrbeschleunigungen oder Bremsverzögerungen, wird auf einfache Weise durch Verstellen eines Blockiergliedes aus einer Standby-Position in eine Blockierstellung erreicht, in welcher die Federwirkung des Haltefingers aufgehoben und der Haltefinger selbst unverrückbar in seiner Halteposition festgelegt wird.

Bei der erfindungsgemäßen Vorrichtung kann das Tragglied eine für den jeweiligen Einsatzzweck angepasste Form und Größe haben und mit einem oder auch mehreren Haltefingern federelastisch integriert ausgebildet sein. Für Greifer von Werkzeugwechslern und auch für die Werkzeugaufnahmen von Teller-, Regal- oder Kettenmagazinen ergeben sich herstellungstechnische und konstruktive Vorteile, wenn das jeweilige Tragglied als formsteife Tragplatte aus Stahl ausgebildet ist, an der die Haltefinger der Werkzeugaufnahmen einteilig angeformt sind. Die jeweils zweckmäßigste Kontur der Tragplatten kann durch geeignete Schneidvorgänge, insbesondere durch Stanzen, Nippeln oder Laserschneiden, erzeugt werden. In einer Tragplatte können nur eine einzige oder auch mehrere Werkzeugaufnahmen ausgebildet sein.

Gemäß der Erfindung besteht das plattenförmige Tragglied aus hochfestem Werkstoff und weist mindestens einen, vorzugsweise mindestens zwei nebeneinander verlaufende Schlitze auf, die einen in den auslenkbaren Haltefinger übergehenden federnden Steg begrenzen, wobei dieser Steg mindestens einen Federabschnitt enthalten kann. Die Schlitze in der vorzugsweise aus Stahl gefertigten Tragplatte können in geeigneter Breite durch spanende Bearbeitung oder durch Laserschneiden hergestellt werden, wobei der geradlinige oder bogenförmige Verlauf und die Länge dieser Schlitze die Breite, Formsteifigkeit und Elastizität des Steges sowie auch die Federcharakteristik des mit diesem Steg einteilig verbundenen Haltefingers bestimmen. Da sich bei seitlichen Auslenkbewegungen des Haltefingers die Breite eines oder auch beider Schlitze in bestimmten Abschnitten vermindert, kann die Federwirkung und die Möglichkeit einer Auslenkung des Haltefingers gezielt beseitigt werden, wenn in diesem bestimmten Abschnitt ein Blockierglied eingebracht wird, an dem sich dann die beiden Seitenwände des jeweiligen Schlitzabschnitts druckfest abstützen und damit eine Breitenänderung dieses Schlitzabschnitts verhindern. Die Blokkierelemente können unterschiedlich, z. B. als Bolzen, Zapfen, Kegel, Keile, Mehrkantriegel, Drehnocken usw., ausgebildet sein und in Längs- oder Querrichtung zwischen einer Stand-by-Position und einer Blockierstellung bewegt sowie auch bei asymmetrischem Querschnitt verdreht werden.

Zur Aufnahme des Blockiergliedes kann in den vorbestimmten Schlitzabschnitt eine Erweiterung ausgebildet sein, deren Form an die Umfangskontur und die Abmessungen des jeweiligen Blockiergliedes angepasst ist, wodurch sich das Einbringen des Blockierglieds in seine Blockierstellung und seine Bewegung in die Stand-by-Position bei erhöhter Positioniergenauigkeit vereinfacht. Das Blokkierglied kann auch direkt auf den auslenkbaren Haltefinger einwirken und dessen Spreizbewegungen verhindern.

Bei einem bevorzugten Ausführungsbeispiel erstreckt sich zumindest einer der den formsteifen Steg und den als Federelement wirkenden Abschnitt einseitig begrenzenden Schlitze ausgehend vom Fußteil des Traggliedes bis in die Aufnahmeöffnung. Der zweite Schlitz kann einen Querabschnitt aufweisen, der den formsteifen Steg unterbricht und zur Aufnahme des Blockiergliedes dient.

Es kann auch nur ein einziger Schlitz im Tragglied ausgebildet sein, der einen Federsteg von konstantem oder variablem Querschnitt einseitig begrenzt. Der Federsteg hat eine geeignete Federkonstante, die von seiner Länge und seinem Querschnitt bestimmt wird. Um die Federwirkung des Steges "weich" zu halten, sodass zur Spreizung des dem Steg zugeordneten Haltefingers nur geringe Kräfte notwendig sind, sollte der Federsteg eine ausreichend große Länge und zumindest abschnittsweise einen geringen Querschnitt haben. Das Blokkierglied sollte in den Haltefinger direkt eingreifen.

Die erfindungsgemäße Greif- und Haltevorrichtung zeichnet sich durch ihre einfache konstruktive Ausbildung, die geringe Anzahl an bewegten Einzelteilen und durch ihre kostengünstige Fertigung gegenüber anderen vergleichbaren Greif- und Haltevorrichtungen aus. Die Integration eines Federelementes in das Tragglied, vorzugsweise in dessen Fußteil, sowie auch die einteilige Ausbildung der beiden Haltefinger jeder Werkzeugaufnahme ermöglichen die Fertigung dieser einteiligen Baugruppe durch einfache Schneidbearbeitung, z. B. mittels Laserstrahl. Die Montagearbeiten beschränken sich auf die Anbringung der Blockierglieder an den Traggliedern und die Anordnung des Verstellmechanismus an einem Maschinenteil.

Die Wirkung des Blockiergliedes ist hocheffektiv, da durch Verstellen in seine Halteposition die elastische Wirkung des Federabschnitts ausgeschaltet wird und ein in sich hochsteifes einteiliges Bauteil bestehend aus Tragglied und Haltefingern entsteht. Vorteilhaft ist ferner, dass die Position des Federabschnittes im Tragglied in weiten Grenzen frei gewählt werden kann. Wenn sich der Federabschnitt im Fußteil des Tragglieds befindet, wird eine relativ große freie Distanz zwischen dem Federabschnitt und der Werkzeugaufnahme erzielt. Entsprechendes gilt für die Positionierung des zur Aufnahme des Blockiergliedes ausgebildeten Schlitzabschnitts, der zweckmäßigerweise quer verläuft. Durch diesen Querverlauf werden die auf den auslenkbaren Haltefinger einwirkenden Momente als reine Druckkräfte in einen formsteifen Bereich des Traggliedes über das in seiner Halteposition befindliche Blockierglied eingeleitet.

Obgleich die Positionierung des Federabschnitts und des einen Schlitzabschnitts zur Aufnahme des Blockierglieds nicht auf den hinteren Bereich des Traggliedes beschränkt ist, bietet diese Anordnung bei Werkzeugwechslern und Tellermagazinen den Vorteil, dass sich keine zusätzlichen Bauelemente im Bereich der Werkzeugaufnahmen bzw. der Haltefinger befinden, die das Einführen bzw. Herausnehmen eines Werkzeugkegels beeinträchtigen könnten.

Das der Erfindung zugrunde liegende technische Konzept lässt sich bei Greifern von Manipulatoren und Werkzeugwechslern anwenden. Ferner können die erfindungsgemäßen Greif- und Haltevorrichtungen in Werkzeugmagazinen eingesetzt werden, und zwar in Ketten-, Teller- und Regalmagazinen. Beim Einsatz der erfindungsgemäßen Vorrichtung in einem Tellermagazin bilden plattenförmige Tragglieder den in herkömmlicher Weise angetriebenen Magazinteller, wobei mehrere kreissegmentförmige Tragplatten zu einem durchgehenden Magazinteller zusammengebaut sein können. Am Außenumfang dieses kreisrunden plattenförmigen Magazintellers sind die Werkzeugaufnahmen mit den federnd auslenkbaren und durch je ein Blockierglied fixierbaren Haltefingern angeordnet, wobei jeweils beide Finger jeder Aufnahme integraler Bestandteil der Tragplatte sind.

Besonders geeignet sind die erfindungsgemäßen Greif- und Haltevorrichtungen in solchen Regalmagazinen, in denen die einzelnen Regale oder auch deren Fächer verschoben oder um Hochachsen verdreht werden. Auch in solchen Fällen ist es zweckmäßig, die Vielzahl von unterschiedlichen Werkzeugen in ihren jeweiligen Aufnahmen zu fixieren, damit sie bei Bewegungen der Regale bzw. der Regalteile nicht aus ihren Aufnahmen herausfallen und andere Bauteile beschädigen können.

Wird die erfindungsgemäße Greif- und Haltevorrichtung in Verbindung mit einem Kettenmagazin eingesetzt, kann das jeweilige Blokkierglied auf den freien Endabschnitt des spreizbaren Haltefingers einwirken. Zweckmäßig ist dabei das Blockierglied als Stift gebildet, der in dem Hohlzapfen des Kettengelenks axial verschiebbar angeordnet ist. Durch einen fluidischen elektromagnetischen oder mechanischen Stellantrieb kann der Stift im Hohlzapfen axial verschoben werden, sodass sein gegebenenfalls verjüngtes Ende in eine entsprechend geformte Ausnehmung im Haltefinger eingreift oder aus dieser freikommt.

Zweckmäßig sind die Werkzeugaufnahmen im jeweiligen Werkzeugmagazin so nebeneinander angeordnet, dass der starre Haltefinger einer Werkzeugaufnahme dem federnd auslenkbaren Haltefinger der nächstfolgenden Werkzeugaufnahme gegenüberliegt. Der freie Zwischenabstand zwischen diesen Haltefingern sollte so gewählt sein, dass sich der federnde Haltefinger im ausgelenkten Zustand am starren Haltefinger abstützt, sodass die Größe seiner Auslenkbewegung und damit auch seine Belastung begrenzt werden.

Weitere Einzelheiten und Vorzüge der erfindungsgemäßen Greif- und Haltevorrichtung lassen sich der folgenden Beschreibung von bevorzugten Ausführungsbeispielen entnehmen, die in der Zeichnung dargestellt sind. Es zeigen:
- Fig. 1: eine erfindungsgemäße Greif- und Haltevorrichtung mit einem ergriffenen Werkzeug in perspektivischer Draufsicht;
- Fig. 2: die erfindungsgemäße Vorrichtung als Greifer eines Werkzeugwechslers mit einem Werkzeug und einer Arbeitsspindel in schematischer Seitenansicht;
- Fig. 3: schematisch ein Kettenmagazin mit erfindungsgemäßen Greif- und Haltevorrichtungen in perspektivischer Schrägansicht;
- Fig. 4: schematisch ein Tellermagazin mit erfindungsgemäßen Greif- und Haltevorrichtungen in perspektivischer Schrägansicht;
- Fig. 5: in Draufsicht ein Kreissegment des Tellermagazins nach Fig. 3;
- Fig. 6: eine weitere Draufsicht auf ein anderes Ausführungsbeispiel eines Kreissegmentes für ein Tellermagazin nach Fig. 3;
- Fig. 7: schematisch ein Ausführungsbeispiel eines Blockierglieds mit Betätigungsmechanismus der erfindungsgemäßen Greif- und Haltevorrichtung im Schnitt;
- Fig. 8: zwei Glieder eines Kettenmagazins mit einer Greif- und Haltevorrichtung in perspektivischer Darstellung; und
- Fig. 9: zwei Glieder eines anderen Kettenmagazins.

Die schematisch dargestellte Greif- und Haltevorrichtung kann in Greifern eines Werkzeugwechslers und - vervielfacht - in Werkzeugmagazinen als Werkzeugträger verwendet werden. Je nach Verwendungszweck können konstruktive Anpassungen der in der Zeichnung lediglich als Ausführungsbeispiele dargestellten Vorrichtung vorgenommen werden.

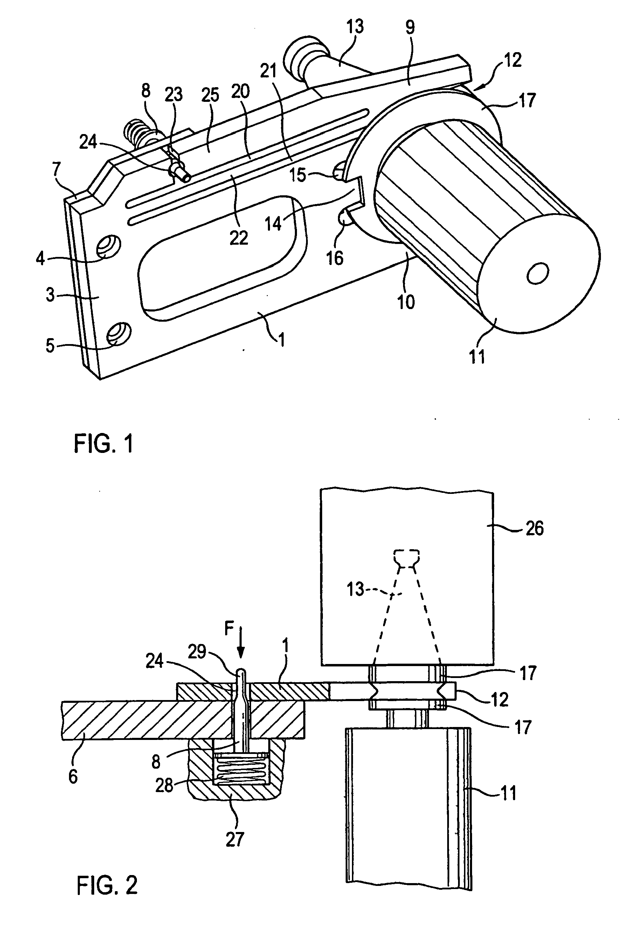

Die in Fig. 1 dargestellte Vorrichtung enthält ein Tragglied 1, das als Stahlplatte von hier etwa 10 mm Dicke und annähernd Rechteckform ausgebildet ist. In dem verjüngten Fußteil 3 der Tragplatte 1 sind zwei eingesenkte Bohrungen 4, 5 in vorgegebenem Zwischenabstand ausgebildet, die der Aufnahme von Befestigungsbolzen dienen, mit denen die Tragplatte 1 an einem geeigneten Bauteil eines Werkzeugwechslers befestigt wird. In Fig. 2 ist ein solches Bauteil 6 schematisch dargestellt.

An der Rückseite des Fußteils 3 der Tragplatte 1 befindet sich eine dünnere Platte 7, die hier als Träger für ein verstellbares Blockierglied 8 dient. Die Tragplatte 1 weist in ihrem mittleren Teil eine etwa rechteckige Ausnehmung zur Gewichtseinsparung auf. An dem in Fig. 1 rechten Endteil der Tragplatte 1 sind zwei Haltefinger 9, 10 integriert ausgebildet, von denen der obere Haltefinger 9 beim Einführen und Herausnehmen eines Werkzeugkegels 13 in eine Aufnahmeöffnung 12 gegen eine Federkraft elastisch auslenkbar ausgebildet ist. Der untere von einem Werkzeug 11 teilweise verdeckte Haltefinger 10 ist massiv und in seiner Position unveränderbar. Beide Haltefinger 9, 10 begrenzen die mehr als halbrunde Aufnahmeöffnung 12, in welcher der Werkzeugkegel 13 des Werkzeugs 11 mit seinem Ringbund 17 eingespannt ist. Zur Lagesicherung des Werkzeugkegels weisen beide Haltefinger 9, 10 eine endseitige Nase und keilförmige Innenflanken auf, die in die Umfangsnut im Ringbund 17 eingreifen. Zur weitergehenden Lagesicherung des Werkzeugkegels 13 in der Aufnahmeöffnung 12 dient eine an der Tragplatte angeformte Nase 14 im Bodenbereich der Aufnahmeöffnung 12, die beidseitig von halbrunden Ausnehmungen 15, 16 begrenzt ist und in eine Aufnehmung des Ringbundes 17 eingreift. Die Größe der Aufnahmeöffnung 12 ist so auf den Durchmesser der Umfangsnut im Ringbund 17 angepasst, dass der Werkzeugkegel 13 mit Vorspannung von den beiden Haltefingern 9, 10 gehalten wird.

In dem in Fig. 1 oberen Teil der Tragplatte 1 sind zwei in Längsrichtung parallel verlaufende Schlitze 20, 21 ausgebildet, die zwischen sich einen Steg 22 begrenzen. Der innere Schlitz 21 erstreckt sich vom Fußteil 3 mit gleichbleibender Breite bis in die Aufnahmeöffnung 12. Der äußere Schlitz 20 ist hier als beidendiger Blindschlitz ausgebildet und erstreckt sich ebenfalls vom Fußteil 3 der Tragplatte 1 bis in die Wurzel des Haltefingers 9. Von diesem äußeren Schlitz 20 zweigt in seinem rückwärtigen Abschnitt ein seitlich frei ausmündender kurzer Querschlitz 23 ab, der eine Erweiterung 24 aufweist, in welcher das in seiner Achsrichtung verstellbare Blockierglied 8 aufgenommen ist. Der Steg 22 hat bei diesem Ausführungsbeispiel einen gleichbleibenden Querschnitt und bildet ein Federelement, das eine seitliche Spreizbewegung des Haltefingers 9 erlaubt. Der Steg 22 kann auch einen über seine Länge hin variablen Querschnitt haben, wodurch sich seine Federwirkung entsprechend ändert. Der gegen Federkraft auslenkbare Haltefinger 9 wird auch als spreizbarer Haltefinger bezeichnet.

Die Funktion und Arbeitsweise der vorstehend beschriebenen Vorrichtung ist folgende.

Ein zu greifendes und halterndes Bauteil, in diesem Fall ein Werkzeugkegel 13 mit seinem Werkzeug 11, wird seitlich entweder durch eine Querbewegung des Werkzeugkegels 13 oder aber durch eine Längsbewegung der Tragplatte 1 bewegt, sodass durch die Rundung des am Werkzeugkegel 13 angeformten Ringbundes 17 der in Fig. 1 obere Haltefinger 9 gegen die Federwirkung des Steges 22 nach oben aufgeschwenkt wird, bis der Werkzeugkegel 13 bzw. sein Ringbund 17 die in Fig. 1 dargestellte Haltestellung in der Aufnahmeöffnung 12 erreicht hat. In dieser Haltestellung ist der obere Haltefinger 9 in die dargestellte Position federnd zurückgeschnappt. Die für diese Auslenkbewegung des Haltefingers 9 und seine selbsttätige Rückstellbewegung erforderliche Federwirkung wird durch den langgestreckten Steg 22 erzielt, der auf seiner gesamten Länge ein Federelement darstellt. Damit der Haltefinger 9 seine Auslenkbewegung durchführen kann, ist der Blockierbolzen 8 kurzzeitig in eine inaktive Position verstellt worden, in welcher er ausreichend lose in der Erweiterung 24 des Querschlitzes 23 sitzt oder aus der Erweiterung 24 ganz entfernt ist. Dadurch verliert der relativ breite Außensteg 25 seine Formsteifigkeit und kann geringfügige Auslenkbewegungen ausführen, wenn der Haltefinger 9 beim Eindrücken oder Herausziehen des Werkzeugkegels 13 aufgespreizt wird. Sobald sich der Werkzeugkegel 13 bzw. sein Ringbund 17 in der in Fig. 1 dargestellten Position befindet, wird das bolzenförmige Blockierglied 8 axial in die Erweiterung 24 im Querschlitz 23 eingedrückt, sodass nunmehr der bis dahin freie in Fig. 1 rechte Abschnitt des Steges 25 in formschlüssiger Abstütz-Verbindung mit dem restlichen Stegteil steht. Danach sind Auslenk- oder Spreizbewegungen des einen oder anderen Haltefingers 9, 10 nicht mehr möglich, sodass das Werkzeug 11 bzw. sein Werkzeugkegel 13 gegen Herausfallen gesichert ist, da die Enden der beiden Haltefinger 9, 10 den Bund 12 in einem Winkelbereich von über 180° umgreifen.

In Fig. 2 ist eine bei einem Werkzeugwechsler eingesetzte Vorrichtung nach Fig. 1 schematisch während eines Wechselvorgangs dargestellt. Ein Werkzeug 11 ist mittels seines Werkzeugkegels 13 in eine Arbeitsspindel 26 eingespannt. Eine etwa in der oben beschriebenen Weise ausgebildete Tragplatte 1 ist auf einem Träger 6 befestigt, an dessen Unterseite ein Gehäuse 27 mit einer Druckfeder 28 montiert ist, die auf eine Fußscheibe eines Blockierbolzens 8 eine ständige Federkraft ausübt. Der Blockierbolzen 8 durchragt eine Bohrung in dem Träger 6 und weist einen verjüngten Endzapfen 29 auf.

Wenn sich ein Werkzeugkegel 13 in der Werkzeugaufnahmeöffnung 12 befindet oder die Werkzeugaufnahme leer ist, wird der Blockierbolzen 8 von der Feder 28 in seine Blockierstellung gedrückt, in welcher der dickere Bolzenschaft die Erweiterung 24 des Querschlitzes 23 ausfüllt.

Wenn in Fig. 2 entweder der Träger 6 mit der darauf befestigten Tragplatte 1 nach rechts und/oder die Arbeitsspindel 26 zusammen mit dem Werkzeug 11 nach links bewegt werden, wird vor Beginn eines Greifvorganges auf den bis dahin in seiner oberen Blockierposition befindlichen Blockierbolzen 8 eine Kraft F ausgeübt, die den Blokkierbolzen 8 gegen die Kraft der Feder 28 in die in Fig. 2 dargestellte untere Stellung drückt. Diese Kraft F kann auf unterschiedliche Weise erzeugt werden, beispielsweise mechanisch durch Keilflächen oder Exzenter sowie auch durch fluidisch bzw. elektrisch betätigte Stellglieder. Wie aus Fig. 2 ersichtlich, ist in dieser Stellung der obere schmale Zapfen 29 des Blockierbolzens 8 mit seitlichem Spiel in der nach dem dickeren Bolzenschaft bemessenen Erweiterung 24 aufgenommen. Die Blockierwirkung des Bolzens 8 ist damit aufgehoben, sodass der zugeordnete Haltefinger 9 gegen die Federkraft des Steges 22 (Fig. 1) durch Einführen des Ringbundes 17 federnd ausgelenkt werden kann. Sobald der Ringbund 17 die in Fig. 1 dargestellte Position erreicht hat, wird der Blockierbolzen 8 von der Kraft F entlastet und kehrt durch Wirkung der Druckfeder 28 in seine obere Position zurück, in welcher sein breiterer Bolzenschaft die Erweiterung 24 ausfüllt und damit den Haltefinger 9 in seiner Haltestellung blockiert. Zur Erzeugung der Kraft F können unterschiedliche Mechanismen, wie Druckmittelelemente, Auflauframpen, Exzenter, usw., verwendet werden, die am Greifer angebaut oder stationär angeordnet sind.

Erfindungsgemäß ausgebildete Greif- und Haltevorrichtungen lassen sich als Werkzeugaufnahmen auch in Werkzeugmagazinen einsetzen, die Teller-, Regal- oder Kettenmagazine sein können.

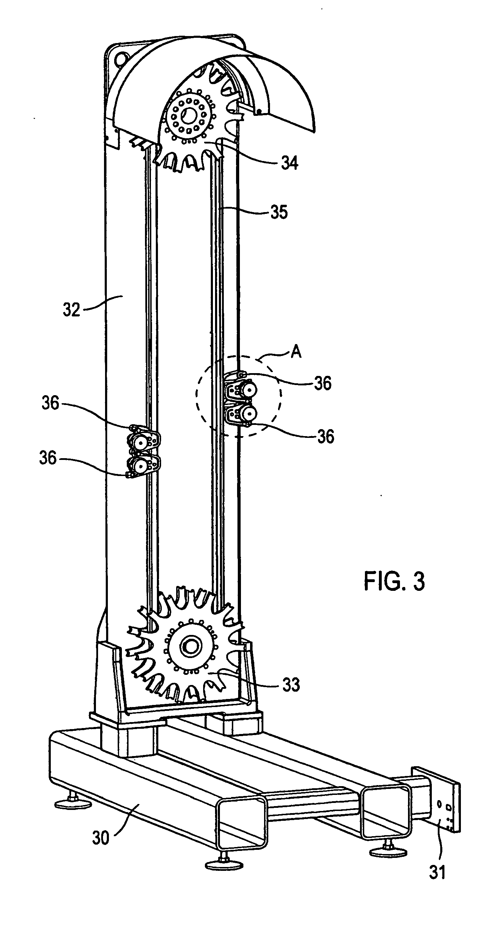

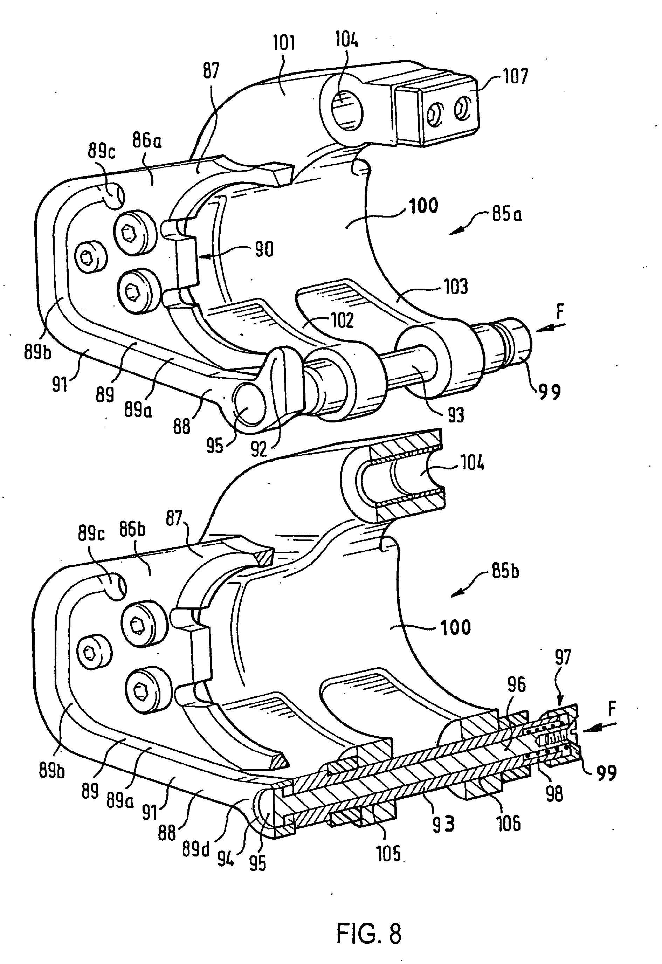

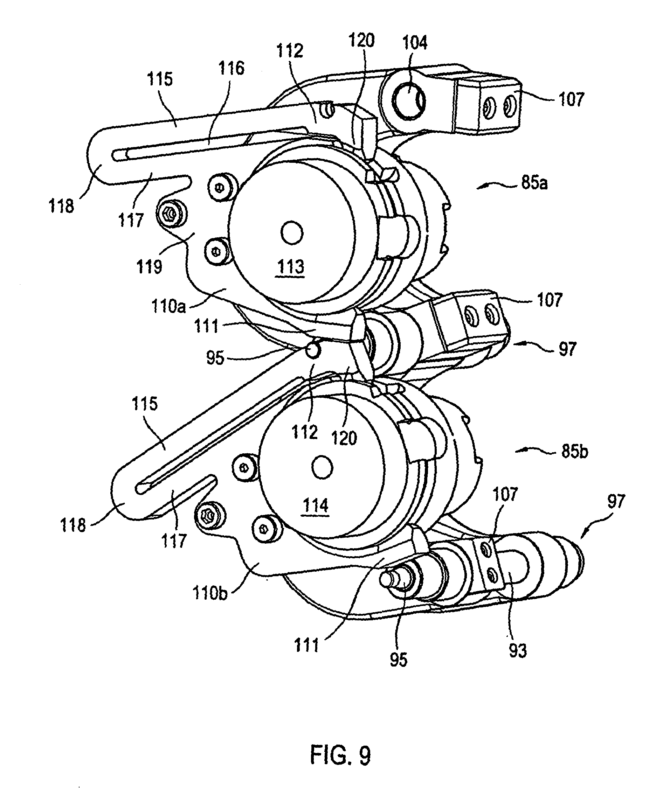

In Fig. 3 ist als Beispiel schematisch ein Kettenmagazin gezeigt, dessen Kettenglieder die in den Fig. 8 bzw. 9 dargestellte Konstruktion haben können. Das Kettenmagazin hat eine stabile Basis 30 mit verstellbaren Stützfüßen und Streben 31 für den seitlichen Anbau z.B. an eine Fräsmaschine. Auf der Basis 30 ist eine vertikale Tragkonstruktion 32 befestigt, an deren stabiler Vorderseite ein unteres und ein oberes Kettenrad 33, 34 montiert sind. Eines dieser Kettenräder 33 bzw. 34 wird von einem - nicht dargestellten - Antriebsaggregat angetrieben. Über beide Kettenräder 33, 34 läuft eine Gliederkette 35, die aus einer Vielzahl von gelenkig durch Bolzen miteinander verbundenen Kettengliedern 36 besteht. In den Fig. 8 und 9 sind zwei Ausführungen solcher Kettenglieder dargestellt, die eine erfindungsgemäße Vorrichtung aufweisen.

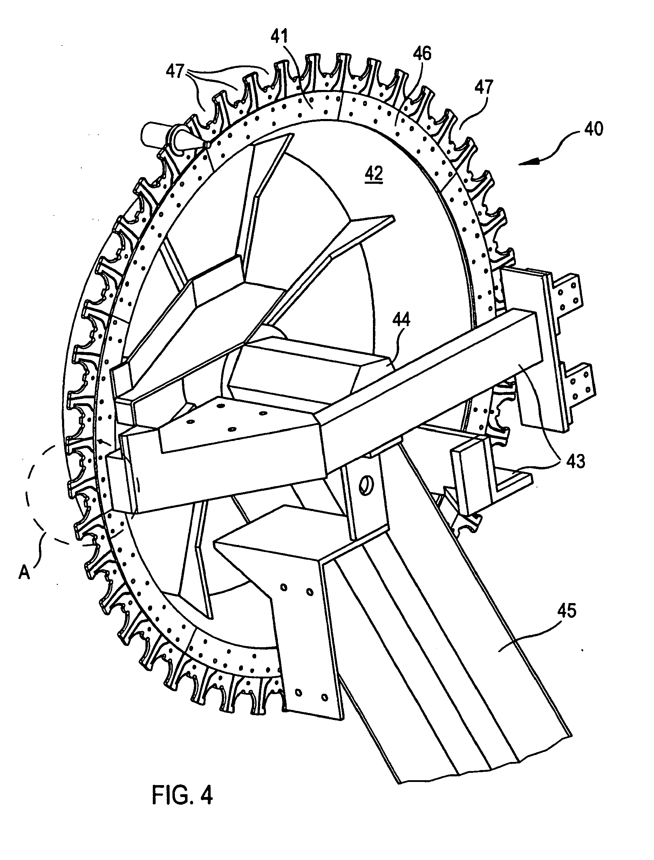

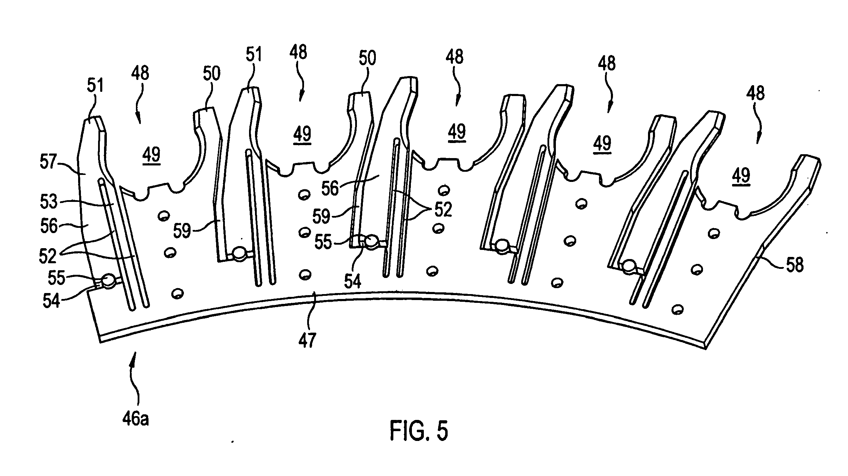

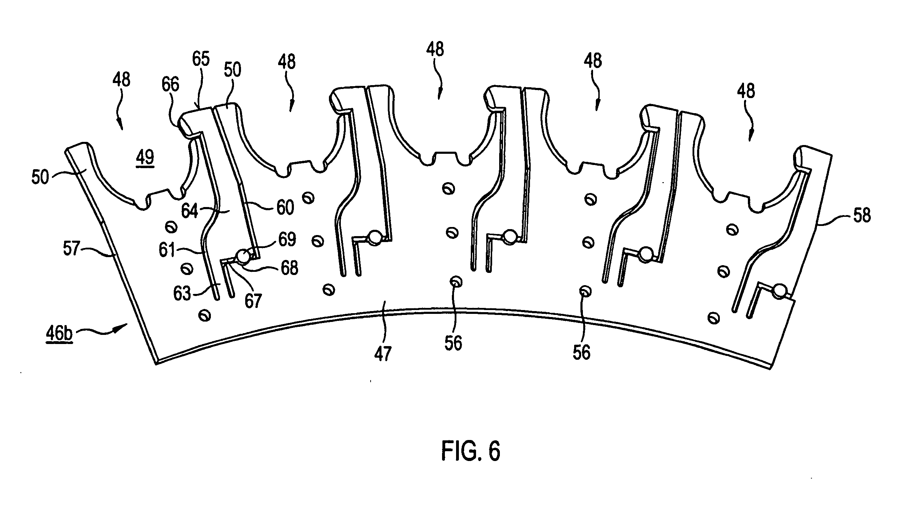

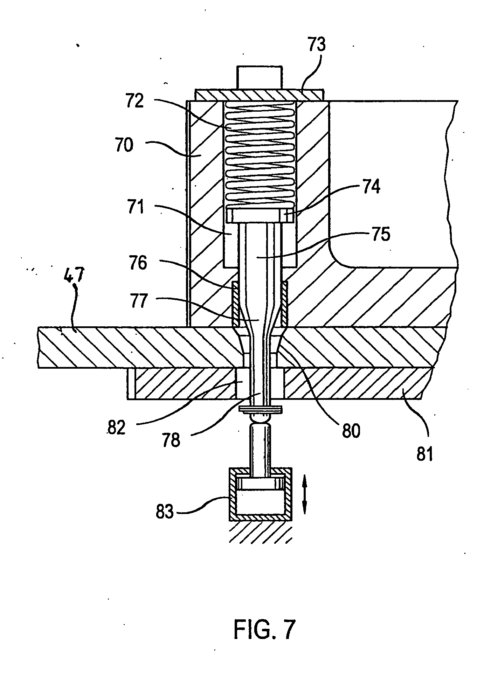

In Fig. 4 ist als weiteres Beispiel ein vertikales Tellermagazin dargestellt, dessen Magazinteller 40 als Ringscheibe 41 ausgebildet ist, die über eine hohlzylindrische Tragkonstruktion 42 an einem Tragrahmen 43 drehbar gelagert ist. Der Tragrahmen 43 enthält ein Antriebsaggregat und stützt sich auf einer Schrägsäule 45 ab. Der ringscheibenförmige Magazinteller 41 ist aus ringsegmentförmigen Tragplatten 46 zusammengebaut, von denen zwei verschiedene Ausführungen anhand der Figuren 5 und 6 im einzelnen beschrieben werden. Jedes Ringscheibensegment 46 weist an seinem radial äußeren Rand mehrere Werkzeugaufnahmen 47 auf. In dem kreisförmigen Ausschnitt A in Fig. 3 und 4 befindet sich die Werkzeug-Wechselstation mit dem Blockiermechanismus, der die in Fig. 7 in vergrößerter Schnittdarstellung gezeigte Konstruktion haben kann.

In den Figuren 5, 6 sind zwei Varianten eines Kreisscheibensegments 46 in Draufsicht dargestellt und als 46a, 46b bezeichnet. Das in Fig. 5 dargestellte Segment 46a besteht aus einer einteiligen formsteifen Tragplatte 47 aus vorzugsweise Stahl mit einer Dicke von etwa 10 mm. An ihrer radialen Außenseite sind hier insgesamt fünf gleich ausgebildete Werkzeugaufnahmen 48 vorgesehen, deren etwas mehr als halbrunde Aufnahmeöffnungen 49 von je einem formsteifen Haltefinger 50 einerseits und von je einem federnd auslenkbaren Haltefinger 51 andererseits begrenzt werden. Wie ersichtlich, entspricht die Konstruktion und damit auch die Funktionsweise der jeweiligen Werkzeugaufnahmen 48 weitgehend derjenigen der in Fig. 1 dargestellten Greif- und Haltevorrichtung, sodass diesbezüglich auf die vorstehende Beschreibung verwiesen werden kann. Jedem auslenkbaren Haltefinger 51 ist ein von zwei bis in den Fußteil der Tragplatte reichenden Schlitzen 52 beidseitig begrenzter langgestreckter Federsteg 53 zugeordnet, der ein Federelement darstellt. Ferner weist jede Werkzeugaufnahme 48 einen Querschlitz 54 auf, der in einen der Schlitze 52 ausmündet und in dessen Erweiterung ein Blockierbolzen 55 mit ggf. konischem Endteil aufgenommen ist. An diesem Querschlitz 54 endet ein von einem Schlitz 59 begrenzter formsteifer Steg 56, der einteilig in den auslenkbaren Haltefinger 51 übergeht. Nach Positionieren des verstellbaren Blockierbolzens 55 in seiner Blockierstellung stützt sich die Endfläche dieses Stegs 56 an dem Blockierbolzen 55 ab.

Zur Befestigung der Tragplatte 47 auf einem geeigneten Träger sind für jede Werkzeugaufnahme 48 jeweils drei Bohrungen zur Aufnahme eines Schraubbolzens vorgesehen. Die seitlichen Endkanten 57, 58 jeder Tragplatte 47 sind so geformt, dass nach dem Zusammenbau ein übergangsloser Anschluss an die nächstfolgende Tragplatte erzielt wird.

Das in Fig. 6 dargestellte Kreisscheibensegment 46b entspricht weitgehend dem Ausführungsbeispiel nach Fig. 5, sodass die gleichartigen Bauteile mit den in Fig. 5 verwendeten Bezugszeichen gekennzeichnet sind. Unterschiedlich ist jedoch der Verlauf der in der Tragplatte 47 z. B. durch Laserstrahl oder spanend erzeugten Schlitze 60, 61, die lediglich in ihren unteren Abschnitten im Fußteil der Tragplatte 47 parallel radial verlaufen und beidseitig einen Federsteg 63 begrenzen. Dieser Federsteg 63 geht nach radial innen in das Tragplattenmaterial und nach radial außen in einen formsteifen Steg 64 über, dessen radial äußerer Endteil den auslenkbaren Haltefinger 65 bildet. An seinem Ende oberhalb der Mündung des Schlitzes 61 weist der auslenkbare Haltefinger 65 eine abgerundete Nase 66 auf. Der den auslenkbaren Haltefinger 65 und den daran anschließenden Steg 64 rückseitig begrenzende Schlitz 60 geht in einen kurzen Querschlitz 67 über, in dem sich die hier kreisrunde Erweiterung 68 zur Aufnahme des verstellbaren Blockierbolzens 69 befindet.

Bei dem in Fig. 6 dargestellten Ausführungsbeispiel stellt der Steg 63 das Federelement für den auslenkbaren Haltefinger 65 dar. Die Stärke des Federeffektes wird von der Breite und Länge des Steges 63 bestimmt. Die Anordnung der Erweiterung 68 zur Aufnahme des verstellbaren Blockierbolzens 69 in dem Querschlitz 67 bewirkt, dass auf den Haltefinger 65 im verriegelten Zustand einwirkende Spreizkräfte als in Längsrichtung des jeweiligen Steges 64 wirkende Druckkräfte über das eingerückte Blockierglied in die Tragplatte 47 übertragen werden. Die Ausführung nach Fig. 5 kann aufgrund der geringen Anzahl an Schlitzen besonders kostengünstig hergestellt werden. Durch die Anordnung des federnden Steges 63 im Fußteil der Tragplatte 47 ergibt sich der Vorteil, dass die radial äußeren Bereiche der Tragplatte 47 mit den Werkzeugaufnahmen 48 und den Haltefingern 50, 65 frei sind und die Blockierbolzen 69 sich im Fußteil der jeweiligen Tragplatte 47 befinden.

Fig. 7 zeigt den Werkzeugübergabe- bzw. Betätigungsbereich im Ausschnitt A in Fig. 3 und 4 für das Ketten- und Tellermagazin. Auf der Tragplatte 47 ist ein Aufsatz 70 montiert, in dessen zylindrischem Innenraum 71 eine Druckfeder 72 eingespannt ist, die sich einerseits an einer Deckplatte 73 und andererseits an dem verbreiterten Kopf 74 eines Blockierbolzens 75 abstützt. Der dickere Schaftteil des Blokkierbolzens 75 ist in einer Gleithülse 76 geführt und weist einen etwa konischen Abschnitt 77 auf, der in einen schmalen Endzapfen 78 übergeht. Wie ersichtlich, ist die Erweiterung 80 in der Tragplatte 47 entsprechend dem konischen Bolzenabschnitt 77 trichterförmig ausgebildet. Unterhalb der Tragplatte 47 befindet sich eine Stützplatte 81, deren Bohrung 82 von dem schmalen Bolzenzapfen 78 durchragt wird. Dieser Bolzenzapfen 78 stützt sich mit seinem balligen Ende auf der Stirnfläche eines Glieds 83 ab, das an einem ortsfesten Bauteil des Tellermagazins montiert ist und über - nicht dargestellte - Antriebsmechanismen vertikale Bewegungen in Richtung des Doppelpfeils ausführt. Die Antriebsmechanismen können hydraulische, pneumatische, elektromagnetische oder auch mechanische Stellelemente enthalten.

Die vorstehend beschriebenen Tellermagazine können in herkömmlicher Weise mit einer vorgegebenen Anzahl unterschiedlicher Werkzeuge besetzt werden. Zum Einsetzen eines bestimmten Werkzeugs in eine vom Bearbeitungsprogramm vorgegebene Werkzeugaufnahme wird das Blockierglied 75 durch eine Vertikalbewegung des Stellglieds 83 aus seiner normalen Blockierstellung in die in Fig. 6 dargestellte angehobene Position verstellt. In dieser Stellung des Blockierglieds 75 kann der Werkzeugkegel des ausgewählten Werkzeugs quer zu seiner Längsachse in die Aufnahmeöffnung eingeschoben werden, wobei der jetzt federelastische Haltefinger federnd ausgelenkt wird und unter Umgreifen des Werkzeugkegels bzw. dessen Ringbundes in seine Ausgangslage zurückschnappt. Daraufhin erfolgt eine Rückstellung des Blockierglieds 75 durch die Kraft der Druckfeder 72, wodurch sein konischer Abschnitt 77 in den konischen Teil der Ausnehmung 80 gedrückt wird. Die Form der Ausnehmung der Fig. 7 entspricht den Formen der in Fig. 5 und 6 dargestellten Erweiterungen 55 und 68. In dieser Stellung des Blockierglieds 75 ist die Wirkung des Federelements 53 in Fig. 5 bzw. 63 in Fig. 6 aufgehoben und der auslenkbare Haltefinger 51 bzw. 65 in seiner Haltestellung blockiert. Damit ist das so ergriffene Werkzeug fest umschlossen und gesichert, sodass der Magazinteller mit hoher Anfahrbeschleunigung gedreht werden kann.

Wenn ein bestimmtes Werkzeug in die Arbeitsspindel eingewechselt werden soll, wird der Magazinteller so gedreht, dass die jeweilige Werkzeugaufnahme mit dem bestimmten Werkzeug in die vorgegebene Übergabestellung gelangt. Während dieser Drehbewegung befinden sich die Blockierglieder aller Werkzeugaufnahmen in ihrer Blokkierstellung und die auslenkbaren Haltefinger sind steif. Beim Einlaufen der ausgewählten Werkzeugaufnahme in die Übergabestellung wird das Blockierglied 75 von seinem Stellmechanismus in seine inaktive Anti-Blockierstellung bewegt (vgl. Fig. 7), wodurch der eine Haltefinger federelastisch auslenkbar wird. Der Greifer des jeweiligen Werkzeugwechslers kann den Werkzeugkegel durch eine horizontale Zugriffsbewegung erfassen und ihn aus der Werkzeugaufnahme unter federnder Auslenkung des Haltefingers seitlich herausziehen. Danach schnappt der Haltefinger in seine Ausgangslage zurück und das Blockierglied wird von der Feder in seine Blockierstellung zurückgedrückt.

Das in Fig. 7 dargestellte Ausführungsbeispiel für einen Betätigungsmechanismus des Verriegelungsbolzens kann auch bei einer Greif- und Tragvorrichtung nach Fig. 1 zur Betätigung des Blockierglieds 8 eingesetzt werden. Durch den konischen Abschnitt 77 des Blockierbolzens 75 und die entsprechend konisch ausgebildete erweiterte Öffnung 80 werden Verklemmungen des Blockierbolzens vermieden. Der Betätigungsmechanismus bzw. der Blockierbolzen und seine Aufnahmeöffnung können so ausgebildet sein, dass der Blokkierbolzen in seiner Blockierstellung eine Zuhaltekraft in dem auslenkbaren Haltefinger erzeugt, die einen sicheren und spielfreien Griff des Werkzeughalters garantiert.

Die Fig. 8 und 9 zeigen jeweils zwei Glieder von Kettenmagazinen, deren weitere Bestandteile, insbesondere die Tragrahmenkonstruktion, Führungsschienen usw. allgemein bekannt sind. Eines dieser Kettenmagazine ist in Fig. 3 gezeigt. Derartige Kettenmagazine werden in der Regel dann eingesetzt, wenn eine größere Anzahl an Bearbeitungswerkzeugen benötigt wird und an der zugehörigen Fräs- und Bohrmaschine nur ein begrenzter Platz zur Verfügung steht. Jedes Kettenglied verfügt über eine gemäß der Erfindung ausgebildete Greif- und Haltevorrichtung zur Aufnahme und Halterung eines Werkzeugs.

In Fig. 8 sind zwei gleich ausgebildete Kettenglieder 85a, 85b voneinander gelöst dargestellt, wobei das untere Kettenglied 85b in der Ebene der Mittelachsen seiner Gelenkbolzen geschnitten gezeichnet ist. Auf einer Stirnfläche jedes Kettenglieds 85a, 85b ist je eine formsteife Tragplatte 86a, 86b aus relativ hochwertigem Stahl durch mehrere Schrauben fest montiert. Die beiden Tragplatten entsprechen in ihrer konstruktiven Ausgestaltung und Funktion den vorstehend beschriebenen plattenförmigen Traggliedern. Jede Tragplatte 86a, 86b weist je zwei einteilig angeformte Haltefinger 87, 88 auf, die eine Aufnahmeöffnung 90 für den standardisierten Werkzeughalter eines Bearbeitungswerkzeugs mehr als halbkreisförmig umgeben. Ebenso wie bei den vorstehend beschriebenen Ausführungen ist ein Haltefinger 87 formsteif und starr und der zweite Haltefinger 88 federn auslenkbar, sodass ein Werkzeughalter unter Spreizung des Haltefingers 88 in die Aufnahmeöffnung 90 eingeschoben und aus ihr herausgezogen werden kann.

In jeder Tragplatte 86a, 86b verläuft ein Schlitz 89, der den langgestreckten auslenkbaren Haltefinger 88 zum massiven großflächigen Teil der Tragplatte hin begrenzt und in der Aufnahmeöffnung 90 seitlich ausmündet. Dieser Schlitz 89 verläuft in einem größeren geradlinigen Abschnitt 89a parallel zur Seitenkante des auslenkbaren Haltefingers 88 und in einem bogenförmigen Abschnitt 89b im hinteren Fußbereich der Tragplatte. Mit seinem anderen Ende mündet der Schlitz 89 in einer kreisförmigen Ausnehmung 89c im Fußbereich der Tragplatte. Bei diesem Ausführungsbeispiel begrenzt der Schlitz 89 in seiner gesamten Länge einen Federsteg 91, der entsprechend dem Verlauf des Schlitzes 89 einen längeren geradlinigen Abschnitt sowie einen bogenförmigen Fußabschnitt aufweist. Die breite und damit auch der Querschnitt des Federstegs 91 ist hier in etwa konstant. Der Federsteg 91 hat eine erhebliche Länge und dadurch eine relativ weich eingestellte Federcharakteristik. Durch Ändern der Dicke des Federstegs durchgehend bzw. in einem oder auch in mehreren Längsabschnitten kann die Federcharakteristik geändert und an entsprechende praktische Bedürfnisse, beispielsweise das Gewicht der jeweiligen Werkzeuge, angepasst werden.

Auch bei den in Fig. 8 und 9 dargestellten Ausführungsbeispielen weist der federnd auslenkbare Haltefinger 88 an seinem freien Endabschnitt eine nach radial innen in die Ausnehmung 90 vorspringende Nase 92 auf, die eine ballige Form hat. Diese Nase 92 bildet ein Betätigungselement für den auslenkbaren Haltefinger 88, da der Werkzeughalter beim Einschieben oder Herausziehen die Nase 92 zur Seite drückt und damit den Haltefinger 88 federnd auslenkt. Ebenso wie bei den anderen Ausführungsbeispielen erstrecken sich die beiden Haltefinger 87, 88 bis über den maximalen Durchmesser des erfassten Werkzeughalters. Dementsprechend erfüllt die Nase 92 im Blockierzustand eine Haltefunktion.

Wie aus dem oberen Teil der Fig. 8 hervorgeht, erstreckt sich der federn auslenkbare Haltefinger 89a bis über die Verlängerung der Gelenkbolzen 93 der Kettenglieder 85a, 85b. Jeder auslenkbare Haltefinger 89a weist in seinem endseitigen verbreiterten Bereich 89d je eine Bohrung 94 zur Aufnahme eines Blockierglieds 95 auf, das am Ende einer längsverstellbaren Stange 96 in Form eines konischen Kopfes ausgebildet ist. Die Stange 96 durchragt den als Hohlzapfen ausgebildeten Gelenkbolzen 93 und trägt an ihrem aus dem Kettenglied 85a, 85b vorstehenden Endabschnitt einen Stellmechanismus 97. Zum axialen Verschieben der Stange 96 in dem Hohlzapfen 93 weist der Stellmechanismus 97 eine den Endabschnitt der Stange 96 umgebende Schraubenfeder 98 und einen in Gegenrichtung der Federkraft wirkenden Druckluftzylinder 99 auf, der auf einem stationären Bauteil der Magazin-Konstruktion montiert ist. Die Stange 96 wird durch die Kraft der Schraubenfeder 98 in ihrer Blockierstellung gehalten, in welcher ihr endseitiger Kopf 95 formschlüssig und spielfrei in die Bohrung 94 des auslenkbaren Haltefinger 88 eingreift und diesen in seine Halteposition fixiert. Zum Erhalt eines festen und spielfreien Sitzes sollte der Blockierkopf 95 und auch die Bohrung 94 aufeinander abgestimmte konische Seitenwandungen haben. Zum Lösen der Blockierung wird der Zylinder 99 mit Druckluft beaufschlagt, wodurch die Stange 96 soweit angehoben wird, dass ein ausreichend großer Freiraum zwischen den Bohrungswänden und dem konischen Kopf 95 entsteht, der ausreichend große Auslenkbewegungen des Haltefingers ermöglichen.

Die Kettenglieder 85a, 85b der in Fig. 8 dargestellten Magazinkette haben einen Mittelteil 100 mit einer teilzylindrischen Innenfläche. An einer Seite dieses großflächigen Mittelteils 100 ist ein formstabiler Mittelsteg 101 und an der Gegenseite sind zwei beabstandete ebenfalls formfeste Stege 102, 103 angeformt. Im zusammengebauten Zustand greift der Mittelsteg 101 in den von den beiden Stegen 102, 103 des benachbarten Kettenglieds begrenzten Zwischenraum. Alle Stege 101, 102, 103 weisen an ihrem Endteil je eine Querbohrung 104, 105, 106 auf, die alle von dem als Hohlzapfen ausgebildeten Gelenkbolzen 93 durchragt werden, wie dies in der Schnittdarstellung im unteren Teil der Fig. 7 gezeigt ist.

Zur Führung der Magazinkette des in Fig. 8 dargestellten Kettenmagazins an einer - nicht dargestellten - stationären Metallschiene der Tragkonstruktion sind Kunststoffklötze 107 an den Endflächen der Mittelstege 101 der Kettenglieder 85a, 85b z. B. durch Senkschrauben oder andere geeignete Mittel befestigt.

Die in Fig. 9 dargestellten beiden Kettenglieder eines anderen Kettenmagazins entsprechen den Kettengliedern nach Fig. 8, sodass gleiche Bauteile mit den gleichen Bezugszeichen gekennzeichnet sind. Lediglich die Tragplatten mit den angeformten Haltefingern sind bei beiden Ausführungen unterschiedlich ausgebildet. Die Tragplatten 110a, 110b des in Fig. 9 dargestellten Kettenmagazins bestehen ebenso wie die Tragglieder der anderen Ausführungsbeispiele aus relativ hochwertigem Stahl und haben eine zur Halterung auch schwerer Werkzeuge ausreichende Dicke. An jeder Tragplatte 110a, 110b sind jeweils ein biegesteifer Haltefinger 111 und ein federn auslenkbarer Haltefinger 112 angeformt, die demzufolge beide aus Teilen der Stahlplatte bestehen. Beide Haltefinger 111, 112 begrenzen eine kreissegmentförmige Aufnahmeöffnung zur Halterung je eines Werkzeugs 113, 114, wobei der von den Haltefingern 111, 112 eingeschlossene Winkelbereich größer als 180° ist, was prinzipiell auch für die anderen Ausführungsbeispiele der erfindungsgemäßen Greif- und Haltevorrichtung gilt.

Wie aus Fig. 9 ersichtlich, gehen die federnd auslenkbaren Haltefinger 112 rückwärtig in einen geradlinigen Federsteg 115 über, der hier eine konstante Breite hat und von einem Schlitz 116 begrenzt wird. Der Federsteg 115 ist einteilig über einen Bogenabschnitt 118 mit einem parallelen Stegabschnitt 117 verbunden, der in den Fußteil 119 der Tragplatte 110a, 110b übergeht. An seinem freien Ende weist der auslenkbare Haltefinger 112 auch bei dieser Ausführung eine nach innen weisende ballige Nase 120 auf.

Die Form und Breite sowie der Zwischenabstand der Haltefinger bei den Ketten-, Regal- und Tellermagazinen sollte so gewählt sein, dass die Endabschnitte der Haltefinger gegenseitige Anschläge bilden, um die maximale Spreizung des auslenkbaren Haltefingers zu begrenzen.

Bei der erfindungsgemäßen Greif- und Haltevorrichtung befinden sich alle Blockierglieder ständig unter Federkraft oder durch andere geeignete Mittel wie formschlüssige Verriegelung oder Reibungsschluss in ihrer Blockierstellung, sodass alle im Magazin oder im Greifer befindlichen Werkzeuge sicher fixiert sind. Lediglich für einen Übergabevorgang wird die Blockierung durch Verstellen eines bestimmten Blockierglieds kurzzeitig aufgehoben, sodass der Werkzeugkegel eines bestimmten Werkzeugs durch federndes Aufspreizen des federnd auslenkbaren Haltefingers aus der Aufnahme herausgezogen oder in die Aufnahme eingeschoben werden kann. Der Betätigungsmechanismus und sein Stellglied für das Blockierglied ist daher nur im Bereich der jeweiligen Übergabestation des Teller- oder Regalmagazins vorzusehen. Ein eigener Antrieb des Betätigungsmechanismus, z. B. ein Druckmittelzylinder, ist nicht in jedem Fall notwendig. Die Betätigung des Blockierglieds kann vielmehr auch von der Bewegung des Greifers und/oder des Magazins abgeleitet werden.

Die Erfindung ist nicht auf die dargestellten Ausführungsbeispiele beschränkt. So können die Anzahl und auch der Verlauf der z.B. gefrästen oder durch Laserschneiden hergestellten Schlitze anders gewählt werden. Von Bedeutung ist lediglich, dass das Tragglied mindestens einen integrierten federnden Abschnitt aufweist, der funktional mit dem auslenkbaren Haltefinger verbunden ist und dessen federelastische Auslenkbewegungen durch Verschließen eines vorbestimmten Schlitzabschnitts aufgehoben werden. Zum Schließen dieses Federabschnitts können neben den vorstehend beschriebenen Blockierbolzen 34, 75 auch andersartige Blockierglieder verwendet werden, die z. B. durch Verschieben oder Verdrehen betätigt und durch geeignete Mittel in ihrer Blockierstellung gehalten oder verriegelt werden.

## Patentansprüche

1. Vorrichtung zum Greifen und Halten eines Bauteils, insbesondere eines Werkzeugs im Handhabungssystem einer Werkzeugmaschine, mit
- mindestens einem Tragglied (1), das als formsteife Tragplatte ausgebildet ist und mindestens zwei Haltefinger (9, 10) aufweist, die eine gemeinsame Aufnahmeöffnung (12) für den zu greifenden Bauteil (11, 13) begrenzen,
- wobei einer der Haltefinger (9) gegenüber dem anderen Haltefinger (10) aus einer Schließstellung in eine Offen-Stellung gegen Federkraft spreizbar ist,
**dadurch gekennzeichnet, dass**
- die beiden Haltefinger (9, 10) einteilig mit dem Tragglied (1) ausgebildet sind,
- mindestens ein Schlitz (20, 21) in dem Tragglied (1) ausgebildet ist, der mindestens einen zum Spreizen des spreizbaren Haltefingers (9) elastisch verformbaren Steg (22) begrenzt, und
- dem spreizbaren Haltefinger (9) ein Blockierglied (8) zugeordnet ist, das in seiner inaktiven Stellung elastische Verformungen des Stegs (22) zum Spreizen des spreizbaren Haltefingers (9) zulässt und das in seiner Blockierstellung elastische Verformungen des Stegs (22) und damit Spreizbewegungen des Haltefingers (9) unterbindet, wenn das Blockierglied (8) in einen bestimmten Abschnitt des Schlitzes eingebracht ist.

2. Vorrichtung nach Anspruch 1,
**dadurch gekennzeichnet, dass**
das Tragglied (86) einen langgestreckten bogenförmigen Schlitz (89) aufweist, der einen in den spreizbaren Haltefinger (88) übergehenden Federsteg (91) begrenzt.

3. Vorrichtung nach Anspruch 1,
**dadurch gekennzeichnet, dass**
das Tragglied einen durchgehenden plattenförmigen Fußteil (3) aufweist, von dem nebeneinanderliegende Schlitze (20, 21) ausgehen, die einen in den spreizbaren Haltefinger (9) übergehenden Steg (22) begrenzen, der einen Federabschnitt enthält.

4. Vorrichtung nach Anspruch 3,
**dadurch gekennzeichnet, dass**
zumindest ein Abschnitt (23, 54, 67) der Schlitze (20, 52, 60) zur Aufnahme mindestens eines Blockierglieds (8; 55; 69) ausgebildet ist.

5. Vorrichtung nach Anspruch 2,
**dadurch gekennzeichnet, dass**
der spreizbare Haltefinger (88) durch direkte Einwirkung des Blockiergliedes (95) blockierbar ist.

6. Vorrichtung nach Anspruch 3 oder 4,
**dadurch gekennzeichnet, dass**
zumindest einer der Schlitze (20, 52, 60) in einem Querabschnitt (23, 54, 67) eine Erweiterung (24, 68) zur Aufnahme des Blokkiergliedes (8, 55, 69) aufweist.

7. Vorrichtung nach einem der vorstehenden Ansprüche,
**dadurch gekennzeichnet, dass**
das Blockierglied ein längs oder quer verstellbarer Verriegelungsbolzen (75) mit rundem, ovalem oder eckigem Querschnitt ist, der einen konischen Abschnitt (77) aufweist.

8. Vorrichtung nach einem der vorstehenden Ansprüche,
**dadurch gekennzeichnet, dass**
das Blockierglied (8, 75) verschiebbar oder durch Verdrehen aus seiner Blockierstellung in seine inaktive Stellung verstellbar ist.

9. Vorrichtung nach einem der vorstehenden Ansprüche,
**dadurch gekennzeichnet, dass**
die einseitig offene und größer als halbrunde Aufnahmeöffnung (12, 90) zur Aufnahme eines Werkzeugkegels (13, 113) ausgebildet ist und zumindest einer der Schlitze (21, 52, 61, 89, 116) ausgehend von dem als durchgehende Platte ausgebildeten Fußteil des Traggliedes (1) in die Aufnahmeöffnung (12) ausmündet.

10. Vorrichtung nach einem der vorstehenden Ansprüche,
**dadurch gekennzeichnet, dass**
dem Blockierglied (8; 55; 69; 75; 95) ein Betätigungsmechanismus (33, F; 72; 83; 97) zugeordnet ist.

11. Werkzeugwechsler einer Werkzeugmaschine mit mehreren zwischen einer Wechselposition in einem Werkzeugmagazin und einer Werkzeugspindel bewegbaren Werkzeuggreifern,
**dadurch gekennzeichnet, dass**
die Werkzeuggreifer Greif- und Haltevorrichtungen nach einem der vorstehenden Ansprüche aufweisen.

12. Werkzeugmagazin einer Werkzeugmaschine mit einer Vielzahl von Werkzeugaufnahmen (48),
**dadurch gekennzeichnet, dass**
die Werkzeugaufnahmen Greif- und Haltevorrichtungen nach einem der Ansprüche 1 bis 10 aufweisen.

13. Tellermagazin nach Anspruch 12,
**dadurch gekennzeichnet, dass**
ein oder mehrere plattenförmige Tragglieder (46a, 46b) einen drehangetriebenen Magazinteller (40) bilden, an dessen Außenumfang Werkzeugaufnahmen (48) mit je einem formsteifen und je einem federnd spreizbaren und in seiner Haltestellung blokkierbaren Haltefinger (51, 65) angeordnet sind.

14. Kettenmagazin nach Anspruch 12,
**dadurch gekennzeichnet, dass**
an den Kettengliedern (85a, 85b) plattenförmige Tragglieder (86a, 86b) mit je einem federnd spreizbaren und in seiner Haltestellung blockierbaren Haltefinger (88) vorgesehen sind.

15. Kettenmagazin nach Anspruch 14,
**dadurch gekennzeichnet, dass**
der spreizbare Haltefinger (88) in einen Federsteg (91) übergeht, der von einem Schlitz (89) seitlich begrenzt wird.

16. Kettenmagazin nach Anspruch 14 oder 15,
**dadurch gekennzeichnet, dass**
das Blockierglied (95) in eine Öffnung (94) am Ende des spreizbaren Haltefingers (88) eingreift.

17. Kettenmagazin nach einem der Ansprüche 14 bis 16,
**dadurch gekennzeichnet, dass**
der formsteife ortsfeste Haltefinger (87) einer Werkzeugaufnahme einen Begrenzungsanschlag für die Spreizbewegung des spreizbaren Haltefingers (87) einer benachbarten Greif- und Haltevorrichtung bildet.

18. Kettenmagazin nach einem der Ansprüche 14 bis 17,
**dadurch gekennzeichnet, dass**
das verstellbare Blockierglied (95) Teil eines Kettengelenks ist.

## Claims

1. Device for gripping and holding a component, in particular, a tool in the handling system of a machine tool, having
- at least one support member (1) which is formed as a dimensionally stable support plate and comprises at least two retaining fingers (9, 10) which define a common receiving opening (12) for the component (11, 13) to be gripped,
- wherein one of the retaining fingers (9) can be splayed against resilient force with respect to the other retaining finger (10) from a closed position to an open position, **characterised in that**
- the two retaining fingers (9, 10) are integrally formed with the support member (1),
- at least one slot (20, 21) is formed in the support member (1) and defines at least one web (22) which is resiliently deformable for splaying the splayable retaining finger (9), and
- the splayable retaining finger (9) is allocated a blocking member (8) which in its inactive position permits resilient deformations of the web (22) for splaying the splayable retaining finger (9) and in its blocking position prevents resilient deformations of the web (22) and thus splaying movements of the retaining finger (9) when the blocking member (8) is introduced into a specific portion of the slot.

2. Device as claimed in claim 1,
**characterised in that**
the support member (86) comprises an elongated arcuate slot (89) which defines a resilient web (91) which transitions into the splayable retaining finger (88).

3. Device as claimed in claim 1,
**characterised in that**
the support member comprises a continuous plate-shaped base part (3), extending from which are adjacent slots (20, 21) which define a web (22) which transitions into the splayable retaining finger (9) which contains a resilient portion.

4. Device as claimed in claim 3,
**characterised in that**
at least one portion (23, 54, 67) of the slots (20, 52, 60) is formed for receiving at least one blocking member (8; 55; 69).

5. Device as claimed in claim 2,
**characterised in that**
the splayable retaining finger (88) can be blocked by direct action of the blocking member (95).

6. Device as claimed in claim 3 or 4,
**characterised in that**
at least one of the slots (20, 52, 60) comprises in a transverse portion (23, 54, 67) a widening (24, 68) for receiving the blocking member (8, 55, 69).

7. Device as claimed in any one of the preceding claims,
**characterised in that**
the blocking member is a longitudinally or transversely adjustable locking bolt (75) having a round, oval or rectangular cross-section which comprises a conical portion (77).

8. Device as claimed in any one of the preceding claims,
**characterised in that**
the blocking member (8, 75) is displaceable or adjustable by rotation from its blocking position to its inactive position.

9. Device as claimed in any one of the preceding claims,
**characterised in that**
the receiving opening (12, 90) which is open on one side and is more than semicircular is formed for receiving a tool taper (13, 113) and at least one of the slots (21, 52, 61, 89, 116), starting from the base part - formed as a continuous plate - of the support member (1), issues into the receiving opening (12).

10. Device as claimed in any one of the preceding claims,
**characterised in that**
the blocking member (8; 55; 69; 75; 95) is allocated an actuating mechanism (33; F; 72; 83; 97).

11. Tool changer of a machine tool having a plurality of tool grippers which can be moved between a change position in a tool magazine and a tool spindle,
**characterised in that**
the tool grippers comprise gripping and holding devices as claimed in any one of the preceding claims.

12. Tool magazine of a machine tool having a plurality of tool receivers (48),
**characterised in that**
the tool receivers comprise gripping and holding devices as claimed in any one of claims 1 to 10.

13. Disk magazine as claimed in claim 12,
**characterised in that**
one or several plate-shaped support members (46a, 46b) form a rotationally driven magazine disk (40), on the outer circumference of which tool receivers (48) are disposed which each have a dimensionally stable and a resiliently splayable retaining finger (51, 65) which can be blocked in its retaining position.

14. Chain magazine as claimed in claim 12,
**characterised in that**
plate-shaped support members (86a, 86b) which each have resiliently splayable retaining finger (88) which can be blocked in its retaining position are provided on the chain links (85a, 85b).

15. Chain magazine as claimed in claim 14,
**characterised in that** the splayable retaining finger (88) transitions into a resilient web (91) which is laterally defined by a slot (89).

16. Chain magazine as claimed in claim 14 or 15,
**characterised in that**
the blocking member (95) engages into an opening (94) at the end of the splayable retaining finger (88).

17. Chain magazine as claimed in any one of claims 14 to 16,
**characterised in that**
the dimensionally stable, positionally fixed retaining finger (87) of a tool receiver forms a limit stop for the splaying movement of the splayable retaining finger (87) of an adjacent gripping and holding device.

18. Chain magazine as claimed in any one of claims 14 to 17,
**characterised in that** the adjustable blocking member (95) is part of a chain joint.

## Revendications

1. Dispositif de préhension et de retenue d'un composant, en particulier d'un outil dans un système de manutention d'une machine-outil, comprenant
- au moins un élément support (1), qui se présente sous la forme d'une plaque support de forme rigide et présente au moins deux doigts de retenue (9, 10), qui délimitent une ouverture de réception commune (12) pour le composant (11, 13) à saisir,
- où l'un des doigts de retenue (9), se trouvant à l'opposé de l'autre doigt de retenue (10), peut être écarté d'une position de fermeture en une position d'ouverture sous l'effet de la force d'un ressort,
**caractérisé en ce que**
- les deux doigts de retenue (9, 10) sont formés en un seul bloc avec l'élément support (1),
- au moins une fente (20, 21) est aménagée dans l'élément support (1), celle-ci délimitant au moins une âme (22) déformable élastiquement pour écarter le doigt de retenue (9) écartable, et
- le doigt de retenue (9) écartable étant associé à un élément de blocage (8) qui autorise, en position inactive, les déformations élastiques de l'âme (22) dans le but d'écarter le doigt de retenue (9) écartable et qui empêche, en position de blocage, les déformations élastiques de l'âme (22) et donc les mouvements d'écartement du doigt de retenue (9) quand l'élément de blocage (8) est introduit dans une portion déterminée de la fente.

2. Dispositif selon la revendication 1, **caractérisé en ce que** l'élément support (86) présente une fente longitudinale en arc de cercle (89), qui délimite une âme à ressort (91) se transformant en ce-dit doigt de retenue (88) écartable.

3. Dispositif selon la revendication 1, **caractérisé en ce que** l'élément support présente une partie base (3) en forme de plaque continue, dont partent des fentes (20, 21) situées côte à côte, qui délimitent une âme (22), comprenant une section à ressort et se transformant en ce-dit doigt de retenue (9) écartable.

4. Dispositif selon la revendication 3, **caractérisé en ce qu'**au moins une portion (23, 54, 67) de la fente (20, 52, 60) est formée dans le but d'accueillir au moins un élément de blocage (8 ; 55 ; 69).

5. Dispositif selon la revendication 2, **caractérisé en ce que** le doigt de retenue (88) écartable peut être bloqué par l'action directe de l'élément de blocage (95).

6. Dispositif selon la revendication 3 ou 4, **caractérisé en ce qu'**au moins une des fentes (20, 52, 60) présente dans une portion transversale (23, 54, 67) un élargissement (24, 68) destiné à la réception de l'élément de blocage (8, 55, 69).

7. Dispositif selon l'une des revendications précédentes, **caractérisé en ce que** l'élément de blocage comprend un boulon de verrouillage (75) réglable longitudinalement ou transversalement, ayant une section transversale circulaire, ovale ou rectangulaire et présentant une portion (77) conique.

8. Dispositif selon l'une des revendications précédentes, **caractérisé en ce que** l'élément de blocage (8, 75) peut être coulissé ou bien réglé par rotation depuis sa position de blocage en une position inactive.

9. Dispositif selon l'une des revendications précédentes, **caractérisé en ce que** l'ouverture de réception (12, 90) ouverte d'un côté et plus grande qu'un demi-cercle est formée dans le but d'accueillir un cône d'outil (13, 113) et au moins une des fentes (21, 52, 61, 89, 116) partant de la partie base (1) qui prend la forme d'une plaque continue débouche dans l'ouverture de réception (12).

10. Dispositif selon l'une des revendications précédentes, **caractérisé en ce qu'**un mécanisme d'actionnement (33; F ; 72 ; 83 ; 97) est affecté à l'élément de blocage (8 ; 55 ; 69 ; 75; 95).

11. Changeur d'outils d'une machine-outil, comprenant plusieurs pinces à outils mobiles entre une position de changement dans un magasin d'outils et une broche porte-outils, **caractérisé en ce que** les pinces à outils présentent des dispositifs de préhension et de retenue selon l'une des revendications précédentes.

12. Magasin d'outils d'une machine-outil, comprenant une multitude de prises pour outils (48), **caractérisé en ce que** les prises pour outils présentent des dispositifs de préhension et de retenue selon l'une des revendications 1 à 10.

13. Magasin circulaire selon la revendication 12, **caractérisé en ce qu'**un ou plusieurs éléments supports (46a, 46b) en forme de plaque déterminent un disque magasin (40) entraîné par rotation, à la périphérie externe duquel sont disposées des prises d'outils (48) comprenant chacune un doigt de retenue (51, 65) de forme rigide et un autre pouvant être écarté sous l'effet d'un ressort et pouvant être bloqué en position de retenue.

14. Magasin à chaîne selon la revendication 12, **caractérisé en ce que** des éléments supports (86a, 86b) en forme de plaque, comprenant chacun un doigt de retenue (88) pouvant être écarté sous l'action d'un ressort et bloqué en position de retenue, sont prévus au niveau des éléments de la chaîne (85a, 85b).

15. Magasin à chaîne selon la revendication 14, **caractérisé en ce que** le doigt de retenue (88) écartable se transforme en une âme à ressort (91), qui est délimitée latéralement par une fente (89).

16. Magasin à chaîne selon la revendication 14 ou 15, **caractérisé en ce que** l'élément de blocage (95) pénètre dans une ouverture (94) située à l'extrémité du doigt de retenue (88) écartable.

17. Magasin à chaîne selon l'une des revendications 14 à 16, **caractérisé en ce que** le doigt de retenue (87) fixe et de forme rigide d'une prise d'outil forme une butée de limitation pour le mouvement d'écartement du doigt de retenue (87) écartable d'un dispositif de préhension et de retenue adjacent.

18. Magasin à chaîne selon l'une des revendications 14 à 17, **caractérisé en ce que** l'élément de blocage (95) réglable fait partie d'une articulation à chaîne.
